(19) Europäisches Patentamt / European Patent Office / Office européen des brevets

(11) **EP 2 931 519 B1**

(12) **EUROPÄISCHE PATENTSCHRIFT**

(45) Veröffentlichungstag und Bekanntmachung des Hinweises auf die Patenterteilung:
**13.09.2017   Patentblatt 2017/37**

(21) Anmeldenummer: **13805833.4**

(22) Anmeldetag: **10.12.2013**

(51) Int Cl.:
*C22C 9/02* (2006.01)          *C22C 9/04* (2006.01)
*F16C 33/20* (2006.01)        *C22C 21/00* (2006.01)
*B32B 15/01* (2006.01)        *F16C 33/12* (2006.01)

(86) Internationale Anmeldenummer:
**PCT/EP2013/076011**

(87) Internationale Veröffentlichungsnummer:
**WO 2014/090764 (19.06.2014 Gazette 2014/25)**

(54) **GLEITLAGERVERBUNDWERKSTOFF**

PLAIN BEARING COMPOSITE MATERIAL

MATÉRIAU COMPOSITE DE PALIER LISSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2012   DE 102012223042**

(43) Veröffentlichungstag der Anmeldung:
**21.10.2015   Patentblatt 2015/43**

(73) Patentinhaber: **Federal-Mogul Wiesbaden GmbH
65201 Wiesbaden (DE)**

(72) Erfinder:
 • **RITTMANN, Stefan
   67292 Kirchheimbolanden (DE)**
 • **ANDLER, Gerd
   65307 Bad Schwalbach (DE)**
 • **WILHELM, Maik
   55270 Ober-Olm (DE)**
 • **COSENTINO, Fabio
   65201 Wiesbaden (DE)**
 • **REICHL, Berndt-Peter
   65201 Wiesbaden (DE)**

(74) Vertreter: **Mehler Achler
Patentanwälte Partnerschaft mbB
Bahnhofstraße 67
65185 Wiesbaden (DE)**

(56) Entgegenhaltungen:
**EP-A2- 2 105 518        EP-B1- 1 764 522
AT-A4- 511 196        DE-A1-102005 023 308
GB-A- 741 995          GB-A- 1 073 428
GB-A- 2 324 838        US-A- 2 735 170
US-A- 2 809 422**

## Beschreibung

Die vorliegende Erfindung betrifft einen Gleitlagerverbundwerkstoff, eine Lagerschale aus einem solchen und ein Gleitlager aus zwei derartigen Lagerschalen, welche schwerpunktmäßig für die innermotorische Anwendung von Fahrzeugen, hauptsächlich für Pleuellager, Kurbelwellen-Hauptlager und Pleuelbuchsen eingesetzt wird. Weitere Anwendungen sind Lagerungen für Nocken- und Ausgleichswellen sowie Lagerungen in Getrieben.

Bekannte Verbundwerkstoffe weisen einen Stahlrücken als Stützschicht, wenigstens eine Lagermetallschicht und in Fällen, in denen die Lagermetallschicht keine ausreichenden Gleiteigenschaften haben, eine darauf aufgebrachte Deck- oder Gleitschicht auf. Niedriger belastete Gleitlager werden üblicherweise aus Verbundmaterialien mit einer Stahlstützschicht und einer Aluminium-basierten Lagermetallschicht hergestellt, während Gleitlager für höhere Belastung aus Stahl-Bronze oder Stahl-Messing Verbundwerkstoffen, also mit einer Kupferbasierten Lagermetallschicht gefertigt werden, weil diese generell eine höhere Ermüdungsfestigkeit als Aluminium-basierte Lagermetalle aufweisen.

Gleitlagerverbundwerkstoffe aus Stahl-Bronze- oder Stahl-Messing-Verbundwerkstoffen werden erzeugt, indem das Lagermetall auf das Stahlband aufgegossen oder aufgesintert wird. Auch eine Herstellung durch Plattieren ist bekannt. In diesem Fall wird zunächst ein Massiv-Bronze- oder Messingband hergestellt und dieses dann, gegebenenfalls nach Umformungs- und Wärmebehandlungsschritten, auf das Stahlband plattiert, meist walzplattiert.

Bleihaltige Werkstoffe sind beispielsweise aus der Schrift DE 39 38 234 C2 bekannt. Der darin beschriebene Schichtverbundwerkstoff weist wahlweise eine auf eine Trägerschicht oder auf eine auf der Trägerschicht aufgebrachte Zwischenschicht gegossene Aluminium-Blei-Dispersionslegierung auf. Die Zwischenschicht kann ihrerseits eine hoch bleihaltige Kupfer-Blei-Zinn-Gusslegierung, eine Kupfer-Aluminium-Legierung, eine Aluminium-ZinnLegierung, eine Aluminium-Nickel-Legierung oder eine Aluminium-Zink-Legierung sein.

Da aus toxikologischen Gründen die Verwendung von Blei gesetzlich untersagt ist, werden heutzutage nahezu ausschließlich bleifreie Bronze- bzw. Messinglegierungen eingesetzt. Dadurch bedingt verschlechtert sich die Zerspanbarkeit der Werkstoffe gegenüber bleihaltigen Bronze- bzw. Messinglegierungen. Durch den Wegfall des Bleis als Festschmierstoff erhöht sich ferner die Fressempfindlichkeit des Lagermetalls, was die Notlaufeigenschaften des Lagers reduziert, wenn die besagte Gleitschicht aufgebraucht sein sollte. Deshalb kommen diese Lagermetalle nur bei langsamen Relativbewegungen zwischen Gleitlageroberfläche und Gegenläufer, z.B. in Pleuelbuchsen, ohne zusätzliche Gleitschicht aus. Bei höheren Gleitgeschwindigkeiten wird die Gleitschicht benötigt. Da die Gleitschichten mit einer Dicke von typischerweise 5 bis 20 $\mu$m sehr dünn sind, würden sie bei direktem Kontakt mit dem Gegenläufer schnell verschleißen und bieten überdies wenig Reserve für die Einbettung von Schmutzpartikeln. Daher ist bei solchen Gleitlagern stets für eine ausreichende Schmierung des Gleitspaltes zu sorgen. Mischreibungsbedingungen sind deshalb zu vermeiden.

Bleifreie Bronze- oder Messingverbundwerkstoffe sind beispielsweise aus den Schriften DE 10 2005 023 308 A1, DE 10 2005 063 324 B4, DE 10 2005 063 325 B4, DE 10 2009 002 442 A1, DE 101 44 126 A1 und DE 10 2011 012 086 A1 bekannt.

Dem gegenüber stellt ein Lagermetall auf Aluminiumbasis eine bessere Einbettfähigkeit für Schmutzpartikel bereit. Auch sind die Notlaufeigenschaften der

Aluminium-Lagermetalle besser, insbesondere wenn diese höhere Zinnanteile aufweisen. Deshalb können diese Werkstoffe mit und auch ohne Gleitschicht Verwendung finden. Die Aluminium-basierten Werkstoffe werden meist als Massiv-Aluminiumband gegossen und gegebenenfalls nach vorgelagerten Umformungs- und Wärmebehandlungsschritten durch Plattieren, meist Walzplattieren, mit einem Stahlband verbunden.

Gleitlager aus Verbundwerkstoffen mit einer Lagermetallschicht aus Aluminium oder einer Aluminiumlegierung sind beispielsweise aus den Schriften DE 10 2005 023 541 A1, DE 102 46 848 A1 und DE 103 43 618 A1 bekannt. In den beiden erstgenannten Schriften werden Aluminium-Zinn-Legierungen besprochen, deren Verschleißbeständigkeit und Ermüdungsfestigkeit teilweise mit Si und anderen Legierungsbestandteilen wie Zn, Cu, Mn, V oder Cr verbessert wird. Die letztgenannte Schrift hat eine Aluminium-Zink-Legierung als Lagermetall zum Gegenstand.

Für die Gleitschicht, auch als Überzug oder Deckschicht bezeichnet, kommen insbesondere Polymere, beispielsweise als Lack aufgebracht, vgl. DE 10 2008 055 194 A1 oder EP 1 522 750 A1, oder chemisch oder elektrochemisch (galvanisch) oder mittels PVD-Verfahren, insbesondere Sputtern, aufgebrachte dünne Metallschichten in Betracht, vgl. DE 199 63 385 A1, GB 2 400 420 A, DE 10 2005 063 324 B4 oder DE 10 2005 063 325 B4. Als metallische Gleitschichten sind viele verschiedene Werkstoffzusammensetzungen bekannt. Sie können beispielsweise eine Zinn-Kupfer-Basis oder Wismut-Basis oder eine AlSn20-Basis aufweisen.

Desweiteren ist ein Gleitlagermaterial mit einer Stützschicht, einer Zwischenschicht aus Kupfer und einer darauf aufgebrachten Gleitschicht auf Aluminiumbasis aus der GB741995 bekannt. Allerdings weist die Zwischenschicht aus Kupfer nur eine Dicke von 0,0002" bis 0,0005" (7,6 $\mu$m bis 12,7 $\mu$m) auf.

Vorstehend genannte Beschichtungen werden in der Gleitlagerherstellung in aller Regel auf das fertig bearbeitete Gleitlager aufgebracht. Das Aufbringen der Gleitschicht verteuert regelmäßig die Herstellung dieser Gleitlager, bei galvanischer Abscheidung oder mittels PVD-Verfahren aufgetragenen Schichten sogar in erheblichem Maße. In vielen Fällen ist zudem zwischen der Lagermetallschicht und der Gleitschicht eine Zwischen- oder Sperrschicht als Diffusionsbarriere vorgesehen, die ebenfalls meist galvanisch abgeschieden wird und den Herstellungsprozess nochmals verteuert.

Aufgabe der vorliegenden Erfindung ist es, einen Gleitlagerverbundwerkstoff, eine Lagerschale und ein Gleitlager bereitzustellen, welche die vorstehend geschilderten Nachteile beider Lagermetalle nicht oder in geringerem Umfang aufweist, insbesondere eine höhere Belastbarkeit als Stahl-Aluminium-Verbundwerkstoffe und eine geringere Fressempfindlichkeit, eine hohe Einbettfähigkeit und eine bessere Zerspanbarkeit als bleifreie Stahl-Bronze- oder Stahl-Messing-Verbundwerkstoffe. Weiterhin soll der Gleitlagerverbundwerkstoff eine kostengünstige Herstellung von Gleitlagern erlauben.

Gelöst wird die Aufgabe durch einen Gleitlagerverbundwerkstoff umfassend eine Stützschicht aus Stahl, eine auf die Stützschicht aufgebrachte Lagermetallschicht aus Kupfer oder einer Kupferlegierung und eine auf die Lagermetallschicht aufgebrachte Funktionsschicht einer Aluminiumlegierung, wobei die Funktionsschicht auf die Lagermetallschicht durch Walzplattieren aufgebracht und die Aluminiumlegierung der Funktionsschicht zinnhaltig und bis auf unvermeidbare Verunreinigungen bleifrei ist und wobei die Lagermetallschicht eine Schichtdicke von 50 bis 595 $\mu$m aufweist.

Aluminium und insbesondere Aluminiumlegierungen mit einem erhöhten Zinn-Anteil weisen, wie oben ausgeführt, im Vergleich zu Kupfer oder bleifreien Kupferlegierungen eine reduzierte Neigung zum Fressen auf. Deswegen ist die Aluminiumlegierung der Funktionsschicht zinnhaltig und bis auf unvermeidbare Verunreinigungen bleifrei.

Ein Gleitlagermaterial mit einer Stahlstützschicht, einer Lagerlegierungsschicht auf Kupferbasis und einer darauf aufgebrachten Gleitschicht auf Aluminiumbasis ist beispielsweise aus den Schriften DE 43 28 921 A1, WO 2005/066512 A1, EP 1 764 522 B1 oder der bereits schon erwähnten DE 10 2005 063 324 B4 bekannt. In diesen Fällen handelt es sich bei der Gleitschicht jedoch um eine Sputterschicht, die, bedingt durch das Auftragungsverfahren, nur eine Dicke von wenigen $\mu$m erreicht.

Insbesondere bei hinreichendem Zinngehalt in der Aluminiumlegierung der Funktionsschicht vermag diese deshalb auch die Funktion der Gleitfläche bereitzustellen. Gleichzeitig weist sie aber auch eine verbesserte Einbettfähigkeit auf und zwar nicht nur als Lagermetalle aus Kupfer oder Kupferlegierungen sondern aufgrund ihrer größeren Dicke auch als die bekannten Gleitschichten.

Ferner wird die Aufgabe durch eine Lagerschale aus einem Gleitlagerverbundwerkstoff der vorstehend beschriebenen Art gelöst.

Die Funktionsschicht weist in der fertigen Lagerschale vorzugsweise eine Schichtdicke von 5 bis 500 $\mu$m auf, wobei die Schichtdicke je nach dem speziellen Anwendungsfall innerhalb dieses Bereiches variieren kann.

Erfordert der Anwendungsfall beispielsweise eine sehr hohe Ermüdungsfestigkeit, wie das bei modernen Dieselmotoren für die Pleuellagerschalen gilt, wird die Funktionsschicht in der Lagerschale möglichst dünn, vorzugsweise 5 bis 50 $\mu$m, ausgelegt.

In dem Gleitlagerverbundwerkstoff hat die Funktionsschicht vorzugsweise zunächst eine höhere Dicke, weil ein Übermaß von typischerweise 100 bis 200 $\mu$m berücksichtigt werden muss, welches benötigt wird, wenn die Innenfläche der aus einer entsprechend dickeren Platine umgeformten Lagerschale mittels spanender Bearbeitung, beispielsweise mittels dem sogenannten Profilbohren oder Räumen, profiliert werden soll. Dabei wird bewusst oftmals ein variierender Wanddickenverlauf der Lagerschale in Umfangsrichtung erzeugt, indem die Profilbohrung exzentrisch zu dem Außenumfang der Lagerschale vorgenommen wird. Da bei der spanenden Bearbeitung nur die innere Lagermetallschicht abgetragen wird, variiert auch nur deren Dicke. Die Angaben für die Dicke der Funktionsschicht in der fertig gebohrten Lagerschale beziehen sich in diesen Fällen immer auf den Hauptlastbereich. Je nach Exzentrizität der Lagerbohrung beträgt die Dicke der Funktionsschicht nach der spanenden Bearbeitung besonders bevorzugt 5 bis 30 $\mu$m bei geringerer Exzentrizität oder auch 20 bis 50 $\mu$m bei größerer Exzentrizität im Hauptlastbereich.

Eine spanende Bearbeitung nur innerhalb des Werkstoffes Aluminium bzw. der Aluminiumlegierung hat den Vorteil, dass die meist schwieriger zu zerspanende Lagermetallschicht aus Kupfer oder einer Kupferlegierung davon unberührt bleibt. Weil sich Aluminium bzw. die Aluminiumlegierung, die vorzugsweise noch eine zusätzliche Weichphase, wie z.B. Zinn, enthalten kann, leichter zerspanen lässt, kann einerseits der Ausschuss reduziert und andererseits die Genauigkeit der Bohrungen erhöht werden. Darüber hinaus wird die Standzeit der zum Bohren verwendeten Werkzeuge erhöht.

Werden besonders hohe Anpassungsfähigkeit und / oder Einbettfähigkeit verlangt, wie das z.B. für Hauptlager von modernen Benzinmotoren gilt, wird die Funktionsschicht in der fertigen Lagerschale vorzugsweise dicker ausgelegt. Anzustreben sind dann Dickenbereiche von 50 bis 500 $\mu$m, besonders bevorzugt von 150 bis 350 $\mu$m. Auch hierbei bleibt nicht außer Acht, dass die Aluminium-basierte Funktionsschicht nicht zu dick sein darf, da ansonsten die mangelnde Ermüdungsfestigkeit des Aluminium-basierten Lagerwerkstoffes wieder zum Tragen kommt, die aufgrund der darunter liegenden Lagermetallschicht auf Kupferbasis jedenfalls unterhalb der oberen Grenzwerte von 500 $\mu$m bzw. 350 $\mu$m für weniger belastete Lager noch wirksam kompensiert werden konnte. Unter diesen Voraussetzungen nehmen die Stützschicht aus Stahl sowie die Lagermetallschicht die im Betrieb des Gleitlagers auftretenden Kräfte und Momente sicher auf, so dass auch die Belastbarkeit eines Gleitlagers aus dem erfindungsgemäßen Gleitlagerverbundwerkstoff der bekannten Bronze oder Messinglager nicht unterlegen ist. Auch hier gilt die obige Überlegung bezüglich des Profilbohrens und dem dafür erforderlichen Übermaß, so dass für den erfindungsgemäßen Gleitlagerverbundwerkstoff in etwa 100 bis 200 μm dickere Schichtdicken vorauszusetzen sind, wenn die Lagerschale anschließend spanend nachgearbeitet werden soll.

In einer vorteilhaften Ausgestaltung enthält die Aluminiumlegierung der Funktionsschicht bis auf Verunreinigungen:

5 - 25 Gew.-% Zinn, vorzugsweise 10 - 20 Gew.-% Zinn,
1,5 - 3,0 Gew.-% Silizium,
0,2 - 2,0 Gew.-% Kupfer, vorzugsweise 0,4 - 1,5 Gew.-% Kupfer
0,2 - 1,5 Gew.-% Mangan, vorzugsweise 0,3 - 1,0 Gew.-% Mangan in Summe max. 0,4 Gew.-% und einzeln max.
0,2 Gew.-% wenigstens eines Elementes aus der Gruppe Vanadium, Chrom, Zirkonium und Titan und
Rest Aluminium.

Durch die Wahl der Legierungen kann der Gleitlagerverbundwerkstoff zielgerichtet auf die jeweilige Anwendung eingestellt werden. So kann beispielsweise die Verschleißfestigkeit mittels eines erhöhten Si-Gehalts gesteigert werden.

In einer vorteilhaften Ausgestaltung ist die Lagermetallschicht als eine bis auf unvermeidbare Verunreinigungen bleifreie Kupferlegierungsschicht ausgeführt. Da die Lagermetallschicht nicht bearbeitet werden muss, kann problemlos auf den Einsatz von Blei verzichtet werden, so dass der erfindungsgemäße Gleitlagerverbundwerkstoff toxikologisch unbedenklich ist. Die im Vergleich zu bleihaltiger Bronze oder zu einer bleihaltigen Messinglegierung verschlechterte Zerspanbarkeit ist beim erfindungsgemäßen Gleitlagerverbundwerkstoff kein Nachteil. Als weiterer Vorteil der Erfindung erhöht sich durch die Anordnung zweier Lagermetallschichten der Anpassungsspielraum.

Ein weiterer Vorteil der Erfindung liegt darin begründet, dass die Funktionsschicht auf die Lagermetallschicht durch Walzplattieren aufgebracht werden kann.

Der erfindungsgemäße Gleitlagerverbundwerkstoff macht den Einsatz derartiger Fügeverfahren und damit eine durchgehende Bandfertigung ohne kostspieliges Beschichtungsverfahren der einzelnen, bereits umgeformten Gleitlager möglich. Die Herstellung der Gleitlager aus dem erfindungsgemäßen Gleitlagerverbundwerkstoff wird dadurch vereinfacht und kostengünstiger.

Es ist bevorzugt, wenn die Stützschicht und die Lagermetallschicht einen Zweikomponentenverbund bilden, wobei die Lagermetallschicht auf die Stützschicht gegossen, gesintert oder plattiert wird.

Hierdurch kann der Herstellungsprozess verbessert werden. Der Zweikomponentenverbund kann als Band vorgefertigt werden, bevor die Funktionsschicht darauf aufgebracht wird.

Die Schichtdicke des Lagermetalls ist im Zusammenhang mit der Schichtdicke der Funktionsschicht zu sehen. In Summe sollten beide Lagermetallschichten vorzugsweise eine Gesamtlagermetalldicke von 200 bis 600 μm und besonders bevorzugt von 300 bis 500 μm haben, da sich bei höheren Schichtdicken der beiden Lagermetallschichten wieder einer Verringerung der Ermüdungsfestigkeit einstellen könnte und bei geringeren Schichtdicken die Einbettfähig nachteilig beeinflusst wird.

In manchen Fällen ist vorteilhaft auf der Funktionsschicht eine weitere Beschichtung aufzubringen. Mit dieser Beschichtung oder Einlaufschicht lassen sich insbesondere die Verschleißfestigkeit und die Gleiteigenschaften des Gleitlagers aus dem erfindungsgemäßen Gleitlagerverbundwerkstoff nochmals steigern, so dass die mit dieser Beschichtung versehenen Gleitlager beispielsweise in Anwendungen mit besonders hohen Gleitgeschwindigkeiten Vorteile bringen können, während sie für die meisten der eingangs genannten Anwendungen aber nicht benötigt werden. Gleitlager mit einer zusätzlich Beschichtung eignen sich besonders für Anwendungsfälle, bei denen häufig Mischreibungszustände vorliegen, wie das z.B. der Fall ist bei Stopp-Start-Bedingungen, wo hohe Anforderungen an die Verschleißbeständigkeit der Lagerwerkstoffe gestellt werden.

Vorzugsweise ist die Beschichtung ein Polymer-Gleitlack. Unter Gleitlack wird ein flüssiger oder pulverförmiger Beschichtungsstoff verstanden, der Füllstoffe zur Verbesserung der Gleitfähigkeit der Oberfläche enthält, dünn auf die Funktionsschicht aufgetragen und durch chemische oder physikalische Vorgänge wie z.B. Verdampfen des Lösungsmittels oder Aushärten mittels UV-Bestrahlung zu einem durchgehend dünnen Film ausgebildet wird. Als Polymere werden bevorzugt PAI (Polyamidimid), PI (Polyimid), PBI (Polybenzimidazol) und/oder Silikonharz verwendet. Die Beschichtung aus einem Polymer-Gleitlack zeichnet sich durch eine hohe Temperatur- und Medienbeständigkeit aus. Der Kunstharzmatrix sind zur Verschleißverminderung typischerweise Füllstoffe wie Eisenoxid oder ein Festschmierstoff wie Molybdändisulfid, Graphit oder hexagonales Bornitrid (h-BN) zugesetzt. Auch können harte Teilchen wie Carbide, Oxide und / oder Nitride eingesetzt werden, um die Verschleißbeständigkeit zu erhöhen.

Die Gleitschichten können in bekannter Weise chemisch oder elektrochemisch auf die Funktionsschicht aufgebracht werden, um hierdurch die Gleiteigenschaften gezielt einzustellen. Die meist metallischen Beschichtungen basieren üblicherweise auf Aluminium-Zinn, Wismut oder Zinn-Kupfer-Zusammensetzungen. Die Beschichtung kann insbesondere aber auch eine Phosphatierung sein.

Vorzugsweise ist die Funktionsschicht aufgeraut. Hierdurch wird die Haftung zwischen der Funktionsschicht und der Beschichtung verbessert. Das Aufrauen kann durch Sandstrahlen oder Anschleifen der Funktionsschicht erfolgen.

Weiterhin betrifft die vorliegende Erfindung die Verwendung eines Gleitlagerverbundwerkstoffes nach einer der zuvor diskutierten Ausführungsformen zur Herstellung von Gleitlagerschalen für Radial-Gleitlager. Die sich hieraus ergebenden Effekte und Vorteile entsprechen denjenigen, die für den Gleitlagerverbundwerkstoff diskutiert worden sind.

Eine Lagerschale weist bekanntermaßen ein halbkreisförmiges Profil auf. Zwei Lagerschalen aus einem Gleitlagerverbundwerkstoff nach einem der vorstehenden Aspekte werden beim Einbau zu einem Radial-Gleitlager zusammengesetzt, das den Gegenläufer vollumfänglich umfasst. Dabei weisen die Lagermetallschicht einer ersten Lagerschale des Gleitlagers vorzugsweise eine Schichtdicke von 150 $\mu$m bis 595 $\mu$m und die Funktionsschicht der ersten Lagerschale eine Schichtdicke von 5 $\mu$m bis 50 $\mu$m auf. Ferner weisen die Lagermetallschicht einer zweiten Lagerschale des Gleitlagers eine Schichtdicke von 50 $\mu$m bis 550 $\mu$m und die Funktionsschicht der zweiten Lagerschale eine Schichtdicke von 50 $\mu$m bis 500 $\mu$m auf, wobei die Gesamtlagermetalldicke, also die Summe der Dicken der Funktionsschicht und der Lagermetallschicht, der ersten Lagerschale und die Gesamtlagermetalldicke der zweiten Lagerschale im Wesentlichen gleich sind und vorzugsweise nicht mehr als 600 $\mu$m, besonders bevorzugt nicht mehr als 500 $\mu$m und ganz besonders bevorzugt zwischen 300 $\mu$m und 500 $\mu$m beträgt.

Anwendungstechnisch gibt es oftmals, wie bei allen Lagern, die mit der Kurbelwelle in einem Verbrennungsmotor in Verbindung stehen, eine hochbelastete Lagerseite und eine niedrigbelastete Lagerseite. Dies gilt beispielsweise für Pleuellager oder auch Kurbelwellen. Die erfindungsgemäße Ausgestaltung des Gleitlagers ermöglicht es innerhalb einer solchen Lagerstelle zwei unterschiedliche Lagerschalen derart zu kombinieren, dass eine hochbelastete Lagerschale eine dünnere Funktionsschicht aus Aluminium oder eine Aluminiumlegierung aufweist, während die weniger belastete Gegenschale desselben Radial-Gleitlagers eine dickere Funktionsschicht aufweist. Grundsätzlich ist die dünnere Aluminium-basierte Funktionsschicht dort vorteilhaft wo hohe Ermüdungsfestigkeit verlangt wird, während die dickere Aluminium-basierte Funktionsschicht ein besseres Einbettverhalten aufweist, um hierdurch die Schmutzempfindlichkeit des gesamten Radial-Gleitlagers zu verringern. Dass die Gesamtlagermetalldicken der ersten und der zweiten Lagerschalen im Wesentlichen gleich sind, verlangt die Lagerung des Gegenläufers. Dabei kann eine Profilbohrung dafür sorgen, dass die Profile und damit der Wanddickenverlauf über den Umfang gesehen um typischerweise 10 $\mu$m bis 20 $\mu$m variieren. Innerhalb dieser Variation ist im Sinne dieser Schrift von im Wesentlichen gleichen Gesamtlagermetalldicken die Rede.

Die Erfindung wird im Folgenden anhand von bevorzugten Ausführungsbeispielen unter Bezugnahme auf die anhängenden Zeichnungen im Detail erläutert. Es zeigen

Figur 1     ein erstes Ausführungsbeispiel eines erfindungsgemäßen Gleitlagerverbundwerkstoffes,

Figur 2     ein zweites Ausführungsbeispiel des erfindungsgemäßen Gleitlagerverbundwerkstoffs und

Figur 3     ein Ausführungsbeispiel eines erfindungsgemäßen Gleitlagers.

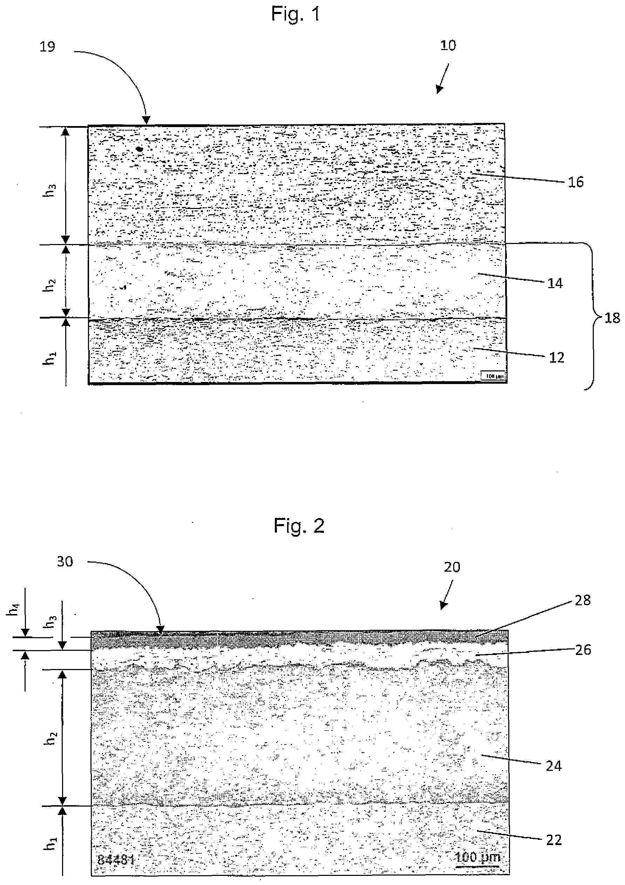

Das in Figur 1 gezeigte erste Ausführungsbeispiel eines erfindungsgemäßen Gleitlagerverbundwerkstoffs $10_1$ umfasst eine Stützschicht 12, eine darauf aufgebrachte Lagermetallschicht 14 auf Kupferbasis sowie eine Funktionsschicht 16 auf Aluminiumbasis, die auf die Lagermetallschicht 14 aufgebracht ist. Aus dem Gleitlagerverbundwerkstoff $10_1$ wird eine nicht dargestellte Gleitlagerschale als Teil eines Gleitlagers gefertigt. Die Stützschicht 12 und die Lagermetallschicht 14 bilden einen Zweikomponentenverbund 18, der beispielsweise durch Gießen, Sintern oder Plattieren der Lagermetallschicht gefertigt wird. Der Zweikomponentenverbund 18 wird dann beispielsweise einer Plattierstation zum Verbinden der Funktionsschicht zugeführt. Die Funktionsschicht 16 wird dort auf die Lagermetallschicht 14 vorzugsweise durch Walzplattieren aufgebracht.

Die Funktionsschicht 16 bildet mit ihrer freien Oberfläche eine Gleitfläche 19 eines aus dem erfindungsgemäßen Gleitlagerverbundwerkstoff 10 hergestellten Lagerelementes. Beispielsweise kann durch Umformen (Biegen oder Rollen) ein Radiallager (Buchse oder Lagerschale) oder durch Ausstanzen eine Anlaufscheibe aus diesem Verbundwerkstoff hergestellt werden. Die Stützschicht 12 ist beispielhaft aus einem Vergütungsstahl C22, die Lagermetallschicht 14 aus Kupferlegierung der Sorte CuNi2Si und die Funktionsschicht 16 aus einer Aluminiumlegierung der Sorte AlSn20 hergestellt.

Die Stützschicht 12 weist eine Schichtdicke $h_1$, die Lagermetallschicht 14 eine Schichtdicke $h_2$ und die Funktionsschicht 16 eine Schichtdicke $h_3$ auf. Unabhängig von dem übrigen Schichtaufbau wird ein Stahlband für die Stützschicht 12 eingesetzt, dessen Schichtdicke $h_1$ im fertigen Verbundwerkstoff zwischen 900 und 1300 $\mu$m beträgt. Die Schichtdicken $h_2$ der Lagermetallschicht 14 und $h_3$ der Funktionsschicht 16 hängen von dem Beanspruchungsgrad der Lagerschale ab. Angaben zu den bevorzugten Bereichen finden sich am Ende der Figurenbeschreibung. Bei dem in Figur 1 gezeigten Beispiel handelt es um einen Schichtaufbau, der insbesondere für eine verbesserte Anpassungsfähigkeit und Einbettfähigkeit des fertigen Lagerelementes konzipiert ist.

In Figur 2 ist ein zweites Ausführungsbeispiel des erfindungsgemäßen Gleitlagerverbundwerkstoffs 20 dargestellt. Die Reihenfolge der Stützschicht 22, der Lagermetallschicht 24 auf Kupferbasis und der Funktionsschicht 26 auf Aluminiumbasis entspricht der des ersten Ausführungsbeispiels. Jedoch sind Dickenverhältnisse hier andere. Während die Stützschicht aus demselben Stahlband hergestellt ist und deshalb die gleiche Dicke aufweist, hat die Lagermetallschicht 24 eine signifikant größere Schichtdicke $h_2$ und die Funktionsschicht 26 eine signifikant geringere Schichtdicke $h_3$ als in dem ersten Ausführungsbeispiel. Dieser Schichtaufbau ist insbesondere für eine verbesserte Tragfähigkeit und Ermüdungsfestigkeit des fertigen Lagerelementes konzipiert.

Weiterhin ist auf der Funktionsschicht 26 eine Beschichtung oder Einlaufschicht 28 aufgebracht, im dargestellten Beispiel ein Polymer-Gleitlack, der die Gleitfläche 30 eines aus dem erfindungsgemäßen Gleitlagerverbundwerkstoff 20 hergestellten Lagerelementes bildet. Zur verbesserten Haftung des Polymer-Gleitlacks auf der Funktionsschicht 26 ist diese vor dem Auftrag des Gleitlackes aufgeraut. Der Polymer-Gleitlack weist vorzugsweise PAI (Polyamidimid) auf und umfasst nicht dargestellte Füllstoffe. Der Polymer-Gleitlack weist eine Schichtdicke $h_4$ auf, die vorzugsweise zwischen 5 und 20 $\mu$m beträgt.

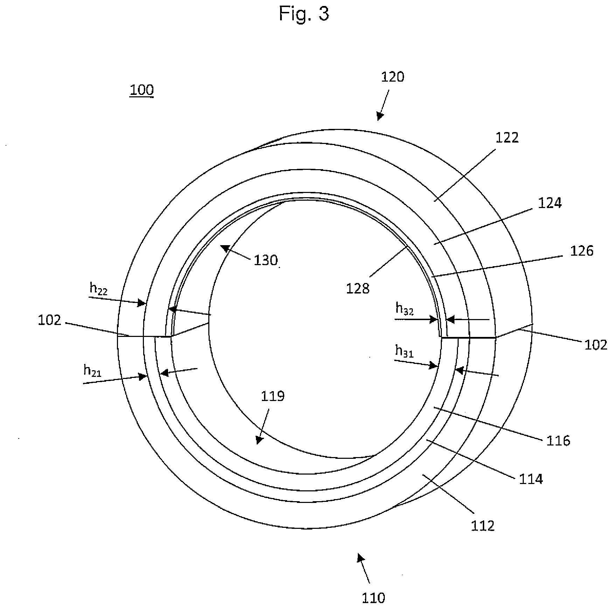

In Figur 3 ist ein erfindungsgemäßes Radialgleitlager 100 gezeigt, das aus einer ersten halbkreisförmigen Gleitlagerschale 110 und einer zweiten halbkreisförmigen Gleitlagerschale 120 in bekannter Weise zusammengesetzt ist. Zwischen den Gleitlagerschalen 110 und 120 sind sogenannten Trennfugen 102 zu erkennen. Die erste Gleitlagerschale 110 bildet beispielsweise die untere und die zweite Gleitlagerschale 120 die obere Lagerschale eines Pleuellagers.

Die erste Gleitlagerschale 110 weist in etwa den Schichtaufbau des Gleitlagerverbundwerkstoffs 10 gemäß dem ersten Ausführungsbeispiel mit einer Stützschicht 112 aus Stahl, einer etwas dünneren Lagermetallschicht 114 auf Kupferbasis mit einer Dicke $h_{21}$ und einer etwas dickeren Funktionsschicht 116 auf Aluminiumbasis mit einer Dicke $h_{31}$ auf. Deshalb ist die erste oder untere Gleitlagerschale für zwar geringere Lasten aber ein verbessertes Einbettverhalten ausgelegt.

Die zweite Gleitlagerschale 120 weist in etwa den Schichtaufbau des Gleitlagerverbundwerkstoffs 20 gemäß dem zweiten Ausführungsbeispiel mit einer Stützschicht 122 aus Stahl, einer dickeren Lagermetallschicht 124 auf Kupferbasis mit einer Dicke $h_{22}$ und einer dünneren Funktionsschicht 126 auf Aluminiumbasis mit einer Dicke $h_{32}$ auf, auf der eine Einlaufschicht 130 aufgebracht ist. Deshalb ist die zweite oder obere Gleitlagerschale für höhere Lasten ausgelegt, was durch das Aufbringen einer Einlaufschicht sogar noch begünstigt wird.

Insgesamt bewegen sich die Dickenverhältnisse der Schichten in den Lagerschalen für ein solches Radiallager bevorzugt innerhalb der folgenden Bereichsgrenzen (alle Angaben in $\mu$m, beziehen sich bei variierender Wanddicke aufgrund einer Profilierung jeweils auf den Hauptlastbereich, der typischerweise im Bereich des Scheitelpunktes der Lagerschale liegt):

a) höher belastete Lagerschale

$$900 \leq h_{11} \leq 1300; \text{ bevorzugt } 1000 \leq h_{11} \leq 1200$$

$$200 \leq h_{21} + h_{31} \leq 600; \text{ bevorzugt } 300 \leq h_{21} + h_{31} \leq 500$$

$$5 \leq h_{31} \leq 50;$$

$$150 \leq h_{21} \leq 595; \text{ bevorzugt } 250 \leq h_{21} \leq 495$$

$$\text{optional } 5 \leq h_{41} \leq 20$$

Mit $h_{11}$ = Schichtdicke der Stützschicht, $h_{21}$ = Schichtdicke der Lagermetallschicht, $h_{31}$ = Schichtdicke der Funktionsschicht und $h_{41}$ = Schichtdicke der optionalen Einlaufschicht

b) geringer belastete Lagerschale

$$900 \leq h_{12} \leq 1300; \text{ bevorzugt } 1000 \leq h_{12} \leq 1200$$

$$200 \leq h_{22} + h_{32} \leq 600; \text{ bevorzugt } 300 \leq h_{22} + h_{32} \leq 500$$

$$50 \leq h_{32} \leq 500; \text{ bevorzugt } 150 \leq h_{32} \leq 350$$

$$50 \leq h_{22} \leq 550; \text{ bevorzugt } 100 \leq h_{22} \leq 350$$

Mit $h_{12}$ = Schichtdicke der Stützschicht, $h_{22}$ = Schichtdicke der Lagermetallschicht und $h_{32}$ = Schichtdicke der Funktionsschicht.

Ein Ausführungsbeispiel des erfindungsgemäßen Radialgleitlagers weist die folgende Schichtdicken und Toleranzen (wiederum in $\mu$m) auf:

a) höher belastete Lagerschale

$$h_{11} = 1100 \pm 50$$

$$h_{21} + h_{31} = 400 \pm 50$$

$$5 \leq h_{31} \leq 50$$

b) weniger belastete Lagerschale

$$h_{12} = 1100 \pm 50$$

$$h_{22} + h_{32} = 400 \pm 50$$

$$150 \leq h_{32} \leq 300$$

Die jeweiligen Wertebereiche für $h_{21}$ und $h_{22}$ ergeben sich rechnerisch, wenn man für die Summen der Lagermetall- und Funktionsschichtdicken ($h_{2n} + h_{3n}$) den Mittelwert 400 $\mu$m annimmt.

Es wird aus Figur 3 und aus den obigen Angaben ersichtlich, dass sowohl die Dicke der Stützschichten als auch die Gesamtlagermetalldicke der Funktionsschicht und der Lagermetallschicht der oberen und der unteren Gleitlagerschalen vorzugsweise gleich gewählt werden. Damit sind klare Vorteile für die Fertigung verbunden. Zum einen können die Bänder als Zwischenprodukte beider Lagerschalen unter Berücksichtigung eines etwaigen Übermaßes gleich dick hergestellt werden. Die Umformautomaten zum Umformen von aus den Bändern erzeugten Platinen müssen nicht umgerüstet werden, weil deren Dicke gleich ist. Schließlich muss auch die Bearbeitungsmaschine, mit der die Lagerschale profiliert und auf Endmaß gebracht wird, nicht umgerüstet werden. Sowohl das Zwischenerzeugnis (umgeformte Lagerschale) als auch das Enderzeugnis (profilierte Lagerschale) haben nämlich die gleichen Gesamtdicken. So können die Gleitlagerschalen optimal auf die je nach Einbaulage im Motor unterschiedlichen Anforderungen individuell angepasst und zu einem Paar zusammengesetzt werden, ohne dass sich der Bearbeitungsaufwand signifikant erhöht.

**Bezugszeichenliste**

10   Gleitlagerverbundwerkstoff
12   Stützschicht
14   Lagermetallschicht
16   Funktionsschicht
18   Zweikomponentenverbund
19   Gleitfläche

20   Gleitlagerverbundwerkstoff
22   Stützschicht
24   Lagermetallschicht
26   Funktionsschicht
28   Beschichtung / Einlaufschicht
30   Gleitfläche

100   Radialgleitlager
102   Trennfuge
110   erste Lagerschale
112   Stützschicht
114   Lagermetallschicht
116   Funktionsschicht
119   Gleitfläche
120   zweite Lagerschale
122   Stützschicht
124   Lagermetallschicht
126   Funktionsschicht
128   Beschichtung / Einlaufschicht
130   Gleitfläche

$h_1$   Schichtdicke der Stützschicht
$h_2$, $h_{21}$, $h_{22}$   Schichtdicke der Lagermetallschicht
$h_3$, $h_{31}$, $h_{32}$   Schichtdicke der Funktionsschicht
$h_4$   Schichtdicke der Beschichtung

**Patentansprüche**

1.   Gleitlagerverbundwerkstoff umfassend

- eine Stützschicht (12) aus Stahl,
- eine auf die Stützschicht (12) aufgebrachte Lagermetallschicht (14) aus Kupfer oder einer Kupferlegierung, und
- eine auf die Lagermetallschicht (14) aufgebrachte Funktionsschicht (16) aus einer Aluminiumlegierung,

**dadurch gekennzeichnet,**
**dass** die Funktionsschicht (16) auf die Lagermetallschicht (14) durch Walzplattieren aufgebracht und die Aluminiumlegierung der Funktionsschicht zinnhaltig und bis auf unvermeidbare Verunreinigungen bleifrei ist und dass die Lagermetallschicht (14) eine Schichtdicke ($h_2$) von 50 bis 595 $\mu$m aufweist.

2.   Gleitlagerverbundwerkstoff nach Anspruch 1,
**dadurch gekennzeichnet, dass** die Aluminiumlegierung der Funktionsschicht bis auf Verunreinigungen

| | |
|---|---|
| 5 - 25 Gew.-% | Zinn, vorzugsweise 10 - 20 Gew.-% |
| 1,5 - 3,0 Gew.-% | Silizium, |
| 0,2 - 2,0 Gew.-% | Kupfer, |

0,2 - 1,5 Gew.-%    Mangan,

in Summe max. 0,4 Gew.-% und einzeln max. 0,2 Gew.-% wenigstens eines Elementes aus der Gruppe Vanadium, Chrom, Zirkonium und Titan und Rest Aluminium enthält.

3. Gleitlagerverbundwerkstoff nach einem der vorstehenden Ansprüche,
   **dadurch gekennzeichnet, dass** die Lagermetallschicht (14) als eine bleifreie Bronze- oder Messingschicht ausgeführt ist.

4. Gleitlagerverbundwerkstoff nach einem der vorstehenden Ansprüche,
   **dadurch gekennzeichnet, dass** die Stützschicht (12) und die Lagermetallschicht (14) einen Zweikomponentenverbund (18) bilden, wobei die Lagermetallschicht (14) auf die Stützschicht (12) gegossen, gesintert oder plattiert ist.

5. Gleitlagerverbundwerkstoff nach einem der vorherigen Ansprüche,
   **dadurch gekennzeichnet, dass** auf der Funktionsschicht (16) eine Beschichtung (20) aufgebracht ist.

6. Gleitlagerverbundwerkstoff nach Anspruch 5,
   **dadurch gekennzeichnet, dass** die Beschichtung (20) ein Polymer-Gleitlack (22) ist.

7. Gleitlagerverbundwerkstoff nach Anspruch5,
   **dadurch gekennzeichnet, dass** die Beschichtung (20) chemisch, mittels sprühlackieren oder elektrochemisch auf die Funktionsschicht (16) aufgebracht ist.

8. Gleitlagerverbundwerkstoff nach einem der Ansprüche 5 bis 7,
   **dadurch gekennzeichnet, dass** die Funktionsschicht (16) aufgeraut ist.

9. Lagerschale aus einem Gleitlagerverbundwerkstoff nach einem der vorstehenden Ansprüche.

10. Lagerschale nach Anspruch 9,
    **dadurch gekennzeichnet, dass** die Funktionsschicht (16) eine Schichtdicke ($h_3$) von 5 $\mu$m bis 500 $\mu$m aufweist.

11. Lagerschale nach Anspruch 9 oder 10,
    **dadurch gekennzeichnet, dass** die Lagermetallschicht (14) und die Funktionsschicht (16) in Summe eine Dicke von 200 bis 600 $\mu$m aufweisen.

12. Gleitlager mit einer ersten und einer zweiten Lagerschale nach einem der Ansprüche 9 bis 11, die zu einem Radiallager zusammengesetzt sind,
    **dadurch gekennzeichnet, dass** die Lagermetallschicht (14) der ersten Lagerschale eine Schichtdicke ($h_{21}$) von 150 $\mu$m bis 595 $\mu$m und die Funktionsschicht (16) der ersten Lagerschale eine Schichtdicke ($h_{31}$) von 5 $\mu$m bis 50 $\mu$m aufweisen;
    und dass die Lagermetallschicht (14) der zweiten Lagerschale eine Schichtdicke ($h_{22}$) von 50 $\mu$m bis 550 $\mu$m und die Funktionsschicht (16) der zweiten Lagerschale eine Schichtdicke ($h_{32}$) von 50 $\mu$m bis 500 $\mu$m aufweisen, wobei die Gesamtdicke der Lagermetallschicht und der Funktionsschicht der ersten Lagerschale und die Gesamtdicke der Lagermetallschicht und der Funktionsschicht der zweiten Lagerschale im Wesentlichen gleich sind.

**Claims**

1. Plain bearing composite material comprising

   - a supporting layer (12) of steel,
   - a bearing metal layer (14) of copper or a copper alloy which is applied to the support layer (12), and
   - a functional layer (16) of an aluminium alloy which is applied to the bearing metal layer (14),

   **characterised in that**
   the functional layer (16) is applied to the bearing metal layer (14) by means of roll-bonding and the aluminium alloy of the functional layer contains tin and is lead-free with the exception of inevitable impurities and **in that** the bearing metal layer (14) has a layer thickness ($h_2$) of from 50 to 595 $\mu$m.

2. Plain bearing composite material according to claim 1,
   **characterised in that** with the exception of impurities the aluminium alloy of the functional layer contains
   5 - 25% by weight tin, preferably 10 - 20% by weight 1.5 - 3.0% by weight silicon,
   0.2 - 2.0% by weight copper,
   0.2 - 1.5% by weight manganese
   in total a maximum of 0.4% by weight and individually a maximum of 0.2% by weight of at least one element from the group vanadium, chromium, zirconium and titanium and the balance aluminium.

3. Plain bearing composite material according to either of the preceding claims,
   **characterised in that** the bearing metal layer (14) is constructed as a lead-free bronze or brass layer.

4. Plain bearing composite material according to any one of the preceding claims, **characterised in that** the support layer (12) and the bearing metal layer (14) form a dual-component compound (18), wherein the bearing metal layer (14) is cast, sintered or plated on the support layer (12).

5. Plain bearing composite material according to any one of the preceding claims, **characterised in that** a coating (20) is applied to the functional layer (16).

6. Plain bearing composite material according to claim 5,
   **characterised in that** the coating (20) is a polymer lubricant paint (22).

7. Plain bearing composite material according to claim 5, **characterised in that** the coating (20) is applied to the functional layer (16) chemically, by means of spray painting or electrochemically.

8. Plain bearing composite material according to any one of claims 5 to 7,
   **characterised in that** the functional layer (16) is roughened.

9. Bearing shell of a plain bearing composite material according to any one of the preceding claims.

10. Bearing shell according to claim 9, **characterised in that** the functional layer (16) has a layer thickness ($h_3$) of from 5 $\mu$m to 500 $\mu$m.

11. Bearing shell according to claim 9 or 10,
    **characterised in that** the bearing metal layer (14) and the functional layer (16) have a thickness of from 200 to 600 $\mu$m in total.

12. Plain bearing having a first and a second bearing shell according to any one of claims 9 to 11, which are combined to form a radial bearing,
    **characterised in that** the bearing metal layer (14) of the first bearing shell has a layer thickness ($h_{21}$) of from 150 $\mu$m to 595 $\mu$m and the functional layer (16) of the first bearing shell has a layer thickness ($h_{31}$) of from 5 $\mu$m to 50 $\mu$m; and **in that** the bearing metal layer (14) of the second bearing shell has a layer thickness ($h_{22}$) of from 50 $\mu$m to 550 $\mu$m and the functional layer (16) of the second bearing shell has a layer thickness ($h_{32}$) of from 50 $\mu$m to 500 $\mu$m, wherein the total thickness of the bearing metal layer and the functional layer of the first bearing shell and the total thickness of the bearing metal layer and the functional layer of the second bearing shell are substantially identical.

**Revendications**

1. Matériau composite pour palier lisse, comprenant

   - une couche porteuse (12) en acier,
   - une couche (14) de métal pour palier, constituée de cuivre ou d'un alliage de cuivre et apposée sur la couche porteuse (12), et
   - une couche fonctionnelle (16), constituée d'un alliage d'aluminium et apposée sur la couche (14) de métal pour palier,

**caractérisé en ce que** la couche fonctionnelle (16) est apposée sur la couche (14) de métal pour palier par plaquage par laminage, et l'alliage d'aluminium de la couche fonctionnelle contient de l'étain et est exempt de plomb à l'exception d'impuretés inévitables, et **en ce que** la couche (14) de métal pour palier présente une épaisseur de couche ($h_2$) de 50 à 595 $\mu$m.

2. Matériau composite pour palier lisse selon la revendication 1, **caractérisé en ce que** l'alliage d'aluminium de la couche fonctionnelle contient, en dehors des impuretés,
5 à 25 % en poids d'étain, de préférence 10 à 20 % en poids,
1,5 à 3,0 % en poids de silicium,
0,2 à 2,0 % en poids de cuivre,
0,2 à 1,5 % en poids de manganèse,
au total au maximum 0,4 % en poids et individuellement au maximum 0,2 % en poids d'au moins un élément du groupe constitué du vanadium, du chrome, du zirconium et du titane, le reste étant de l'aluminium.

3. Matériau composite pour palier lisse selon l'une des revendications précédentes, **caractérisé en ce que** la couche (14) de métal pour palier est réalisée sous la forme d'une couche de bronze ou de laiton exempte de plomb.

4. Matériau composite pour palier lisse selon l'une des revendications précédentes, **caractérisé en ce que** la couche porteuse (12) et la couche (14) de métal pour palier forment un composite (18) à deux composants, sachant que la couche (14) de métal pour palier est coulée, frittée ou plaquée sur la couche porteuse (12).

5. Matériau composite pour palier lisse selon l'une des revendications précédentes, **caractérisé en ce qu'**un revêtement (20) est apposé sur la couche fonctionnelle (16).

6. Matériau composite pour palier lisse selon la revendication 5, **caractérisé en ce que** le revêtement (20) est un vernis antifriction polymère (22).

7. Matériau composite pour palier lisse selon la revendication 5, **caractérisé en ce que** le revêtement (20) est apposé sur la couche fonctionnelle (16) par voie chimique, par pulvérisation ou par voie électrochimique.

8. Matériau composite pour palier lisse selon l'une des revendications 5 à 7, **caractérisé en ce que** la couche fonctionnelle (16) est rendue rugueuse.

9. Coquille de coussinet constituée d'un matériau composite pour palier lisse selon l'une des revendications précédentes.

10. Coquille de coussinet selon la revendication 9, **caractérisée en ce que** la couche fonctionnelle (16) présente une épaisseur de couche ($h_3$) de 5 $\mu$m à 500 $\mu$m.

11. Coquille de coussinet selon la revendication 9 ou 10, **caractérisée en ce que** la couche (14) de métal pour palier et la couche fonctionnelle (16) présentent au total une épaisseur de 200 à 600 $\mu$m.

12. Palier lisse avec une première et une deuxième coquilles de coussinet selon l'une des revendications 9 à 11, qui sont réunies pour former un palier radial,
**caractérisé en ce que** la couche (14) de métal pour palier de la première coquille de coussinet présente une épaisseur de couche ($h_{21}$) de 150 $\mu$m à 595 $\mu$m et la couche fonctionnelle (16) de la première coquille de coussinet présente une épaisseur de couche ($h_{31}$) de 5 $\mu$m à 50 $\mu$m ;
et **en ce que** la couche (14) de métal pour palier de la deuxième coquille de coussinet présente une épaisseur de couche ($h_{22}$) de 50 $\mu$m à 550 $\mu$m et la couche fonctionnelle (16) de la deuxième coquille de coussinet présente une épaisseur de couche ($h_{32}$) de 50 $\mu$m à 500 $\mu$m,
sachant que l'épaisseur totale de la couche de métal pour palier et de la couche fonctionnelle de la première coquille de coussinet et l'épaisseur totale de la couche de métal pour palier et de la couche fonctionnelle de la deuxième coquille de coussinet sont sensiblement identiques.

## Fig. 1

## Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3938234 C2
- DE 102005023308 A1
- DE 102005063324 B4
- DE 102005063325 B4
- DE 102009002442 A1
- DE 10144126 A1
- DE 102011012086 A1
- DE 102005023541 A1
- DE 10246848 A1
- DE 10343618 A1
- DE 102008055194 A1
- EP 1522750 A1
- DE 19963385 A1
- GB 2400420 A
- GB 741995 A
- DE 4328921 A1
- WO 2005066512 A1
- EP 1764522 B1